# EUROPÄISCHE PATENTSCHRIFT

(11) **EP 3 738 005 B1**
(45) Veröffentlichungstag und Bekanntmachung des Hinweises auf die Patenterteilung: **09.03.2022**
(21) Anmeldenummer: 19700486.4
(22) Anmeldetag: 11.01.2019
(51) Int. Cl.: G05B 17/02

(54) **EMULATIONSVORRICHTUNG ZUR EMULATION EINES ELEKTROMOTORS**
EMULATION DEVICE FOR EMULATING AN ELECTRIC MOTOR
DISPOSITIF D'ÉMULATION POUR ÉMULER UN MOTEUR ÉLECTRIQUE

(30) Priorität: 12.01.2018 DE 102018200441
(43) Veröffentlichungstag der Anmeldung: 18.11.2020
(73) Patentinhaber: AVL SET GMBH, 88239 Wangen (DE)
(72) Erfinder: HAMMERER, Horst, 88161 Lindenbert (DE); WINZER, Patrick, 88239 Wangen (DE); SCHMITT, Alexander, 88239 Wangen (DE)
(74) Vertreter: Mathys & Squire
(86) Internationale Anmeldenummer: PCT/EP2019/050666
(87) Internationale Veröffentlichungsnummer: WO 2019/138061

(56) Entgegenhaltungen:
- US-A1- 2010 060 210
- US-A1- 2010 250 092
- US-B2- 9 857 820

## Beschreibung

Die vorliegende Erfindung betrifft eine Emulationsvorrichtung zur Emulation eines Elektromotors. Ferner bezieht sich die Erfindung auf ein Verfahren zur Bereitstellung der Emulation.

Es ist aus dem Stand der Technik bekannt, dass Elektromotor-Emulatoren genutzt werden können, um das elektrische Verhalten von Elektromotoren zum Testen von Antriebsumrichtern nachzubilden. Der Einsatz solcher Emulatoren ermöglicht es, dass für das Testen auf die Bereitstellung realer Elektromotoren verzichtet werden kann, wodurch sich Vorteile hinsichtlich der Sicherheit, der Testgeschwindigkeit, der Genauigkeit, der Reproduzierbarkeit sowie der Flexibilität ergeben können. Gattungsgemäße Emulatoren sind beispielsweise aus der DE 10 2013 019 957 A1 sowie der EP 3196714 A1 und der US 2010/250092 A1 bekannt.

Um das Verhalten eines bestimmten Elektromotors zu emulieren, ist es erforderlich, den Elektromotor-Emulator für diesen bestimmten Elektromotor zu parametrieren. Hierzu müssen diverse elektrische und/oder magnetische Parameter des Elektromotors ermittelt werden. Falls der zu emulierende Elektromotor nicht physikalisch vorhanden ist, können diese Parameter zum Beispiel aus Datenblättern oder analytisch oder durch numerische Berechnungen gewonnen werden. Weil gegebenenfalls nicht sämtliche physikalische Effekte berücksichtigt werden können und Parameterstreuungen aufgrund von Fertigungstoleranzen oder Alterung eines einzelnen Elektromotorexemplars oder aus ähnlichen Gründen nicht abgebildet werden können, entstehen unter Umständen Ungenauigkeiten bei der Ermittlung der Parameter.

Darüber hinaus kann es möglich sein, dass der zu emulierende Elektromotor physikalisch vorliegt. In diesem Fall können die zu ermittelnden Parameter dieses spezifischen Exemplars aus Messungen gewonnen werden. Zu diesem Zweck sind verschiedene Verfahren bekannt, welche sich im Wesentlichen in zwei Gruppen einteilen lassen. Einer ersten Gruppe zugehörig sind dabei Verfahren, bei welchen die Messung auf einem rotierenden Prüfstand im stationären Betrieb des Elektromotors bei konstanter von Null verschiedener Drehzahl durchgeführt wird. Hierbei ist es erforderlich, dass neben dem zu emulierenden Elektromotor mindestens ein weiterer Elektromotor als mechanische Belastungseinheit, zwei Leistungseinheiten mit Leistungsversorgung zur Ansteuerung dieser beiden Elektromotoren, eine Identifikations-Modelleinheit sowie eine Messwerterfassungseinheit vorhanden sind.

Gemäß einer zweiten Gruppe können Verfahren angeführt werden, bei denen auf den zusätzlichen Elektromotor verzichtet wird. Hierbei wird der zu emulierende Elektromotor festgebremst oder der freien Bewegung überlassen. Derartige Verfahren sind zum Beispiel aus der EP 2693226 A1 oder der US 2010/0060210 A1 bekannt. Die Anwendung solcher Verfahren setzt dabei voraus, dass mindestens eine Leistungseinheit mit Leistungsversorgung für den zu emulierenden Elektromotor, eine Identifikations-Modelleinheit sowie eine Messwerterfassungseinheit vorgesehen sind.

Häufig ist dabei ein Problem, dass zur messtechnischen Identifikation der Parameter eines physikalisch vorliegenden Elektromotors zum Zwecke der anschließenden Emulation mit einem Elektromotor-Emulator weitere Ausrüstung nötig ist. In anderen Worten muss als zusätzliche Ausrüstung eine Motorparameter-Identifikationseinheit vorgesehen sein. Diese Motorparameter-Identifikationseinheit umfasst zum Beispiel eine Leistungseinheit zur Leistungsversorgung des Elektromotors, dessen Parameter zu identifizieren sind, eine Identifikations-Modelleinheit, eine Dateneinheit zum Ablegen von Messwerten sowie eine Messwerterfassungseinheit. Es wird deutlich, dass zusätzlich zum Elektromotor-Emulator umfangreiche weitere Ausrüstung genutzt werden muss, um die Parameteridentifikation des Elektromotors durchführen zu können. Hierdurch kann ein zusätzlicher Kostenaufwand und/oder Platzbedarf entstehen. Ferner kann die technische Komplexität durch die zusätzliche Ausrüstung erhöht werden, und die Durchführung der Parameteridentifikation erschwert und damit auch zeitlich aufwendiger erfolgen.

Es ist daher eine Aufgabe der vorliegenden Erfindung, die voranstehend beschriebenen Nachteile zumindest teilweise zu beheben. Insbesondere ist es Aufgabe der vorliegenden Erfindung, den zeitlichen und materiellen Aufwand bei der Parameteridentifikation bei einem Elektromotor zum Zwecke der anschließenden Emulation zu reduzieren.

Die voranstehende Aufgabe wird gelöst durch eine Emulationsvorrichtung mit den Merkmalen des Anspruchs 1 und durch ein Verfahren mit den Merkmalen des Anspruchs 9. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Emulationsvorrichtung beschrieben sind, selbstverständlich auch im Zusammenhang mit dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch eine (elektrische) Emulationsvorrichtung (ggf. auch als "Emulatorvorrichtung" oder "Elektromotor-Emulator" oder kurz "Emulator" bezeichnet) zur Emulation eines Elektromotors, um vorzugsweise wenigstens eine (technische) Eigenschaft des Elektromotors bei einer Prüfung eines elektrischen Geräts, vorzugsweise eines Umrichters, wie eines Antriebsumrichters, und/oder Inverters und/oder Stromrichters und/oder Wechselrichters, nachzubilden. Das elektrische Gerät ist dabei vorteilhafterweise ein solches Gerät, welches zum Betreiben des Elektromotors verwendet werden kann und dem Elektromotor ggf. vorgeschaltet wird. Um zur Untersuchung des Geräts auf die aufwendige Nutzung eines realen Elektromotors für die Prüfung zu verzichten, kann die Emulationsvorrichtung als Elektromotor-Emulator genutzt werden. Die Emulation kann dabei die zumindest teilweise Simulation und/oder Nachbildung des Elektromotors und/oder wenigstens einer Eigenschaft wie eines elektrischen Verhaltens des Elektromotors umfassen. Ein weiterer Vorteil kann zudem dadurch erzielt werden, dass die Emulationsvorrichtung die Emulation mehrerer, verschiedener Elektromotoren durchführen kann. In anderen Worten kann die Emulationsvorrichtung für verschiedene Elektromotoren parametriert werden, und somit zur Emulation variabel elektrische und/oder magnetische Eigenschaften von Elektromotoren nachbilden. Entsprechend kann für die Prüfung auf eine aufwendige und/oder unflexible Nutzung dieser verschiedenen Elektromotoren verzichtet werden, und stattdessen eine ggf. kompakte und technisch an die Prüfung angepasste Emulationsvorrichtung den jeweiligen Elektromotor repräsentieren.

Hierbei kann die erfindungsgemäße Emulationsvorrichtung wenigstens eine Emulationseinheit (oder auch als Emulatoreinheit bezeichnet) zur Bereitstellung einer Emulationsfunktion aufweisen, welche dazu dient, die Emulation anhand wenigstens eines Motorparameters des Elektromotors durchzuführen. So kann die Emulationseinheit z. B. für die Emulation verschiedener Elektromotoren angepasst werden, indem die Motorparameter entsprechend verändert werden. Die Emulationseinheit kann zur Durchführung der Emulation mit weiteren Komponenten der Emulationsvorrichtung elektrisch und/oder funktional gekoppelt sein.

Ferner ist vorteilhafterweise eine Identifikationseinheit zur Bereitstellung einer Identifikationsfunktion in die Emulationsvorrichtung integriert, um eine Parameteridentifikation des wenigstens einen Motorparameters beim Elektromotor durchzuführen. In anderen Worten kann die erfindungsgemäße Emulationsvorrichtung die Identifikationseinheit aufweisen, vorzugsweise in einer festen schaltungs- und/oder softwaretechnischen Integration mit der wenigstens einen Emulationseinheit. Diese Ergänzung der Emulationsvorrichtung um die Identifikationseinheit, insbesondere einer Motorparameter-Identifikationseinheit, hat den Vorteil, dass technisch besonders einfach und platzsparend die Parameteridentifikation durchgeführt werden kann, und mit geringem Zeitaufwand anschließend direkt die Parametrierung des Emulators zur Emulation erfolgen kann.

Ein besonderer Vorteil ergibt sich ferner daraus, dass durch die Integration der Identifikationseinheit ggf. weitere und bereits für die Emulation vorhandene Komponenten der Emulationsvorrichtung für die Parameteridentifikation mitverwendet werden können. Daraus kann sich eine enorme Vereinfachung und Kostenersparnis ergeben. So weist die Emulationsvorrichtung zum Zwecke der Emulation, also der Nachahmung eines Elektromotors, z. B. bereits wenigstens eine der nachfolgenden Komponenten auf:
- eine Leistungseinheit vorzugsweise mit Leistungsversorgung,
- eine Emulator-Modelleinheit, welche bevorzugt basierend auf mathematischen Modellen des Elektromotors die Aussteuergrade der Leistungseinheit berechnen kann,
- eine Dateneinheit, insbesondere zur Bereitstellung von Parametern für das mathematische Modell der Modelleinheit,
- eine Messwerterfassungseinheit, vorzugsweise zur Messung betriebsrelevanter Größen wie z. B. elektrischer Ströme und/oder elektrischer Spannungen.

Da diese Komponenten in ähnlicher oder gleicher Form für eine Parameteridentifikation genutzt werden können, ist es denkbar, dass wenigstens eine dieser Komponenten zur Ausbildung einer Identifikationsfunktion zur Parameteridentifikation bei der Emulationsvorrichtung genutzt wird.

Bevorzugt wird im Rahmen der Erfindung unter einem "Elektromotor" ein physikalischer Energiewandler verstanden, welcher eine mechanische in eine elektrische und/oder eine elektrische in eine mechanische Energie wandelt. Des Weiteren können Elektromotoren ggf. anhand ihres Wirkprinzips (z.B. permanentmagneterregte Synchronmaschine, fremderregte Synchronmaschine, Asynchronmaschine, Gleichstrommaschine, Reluktanzmaschine), ihrer Phasenzahl (z.B. einphasig, dreiphasig, fünfphasig, sechsphasig) oder ihres mechanischen Aufbaus (z.B. Innenläufer, Außenläufer, Linearmotor) unterschieden werden. Ferner kann ein "Elektromotor-Emulator" Geräte bezeichnen, die eine oder mehrere Eigenschaften von Elektromotoren nachbilden können, ohne dabei selbst einen physikalischen Elektromotor zu umfassen. Die erfindungsgemäße Emulationsvorrichtung kann als ein solcher Elektromotor-Emulator ausgeführt sein. Weiterhin werden als "Messwerte" ggf. die von einer Messwerterfassungseinheit erfassten physikalischen Größen bezeichnet, zu diesen können etwa elektrische Spannungen, elektrische Ströme, Temperaturen, Drehmomente, Drehzahlen, Geschwindigkeiten oder die Position des beweglichen Teils des Elektromotors zählen.

Vorteilhaft ist es darüber hinaus, wenn bei der erfindungsgemäßen Emulationsvorrichtung die Identifikationseinheit elektronisch oder softwaretechnisch mit der wenigstens einen Emulationseinheit verbunden ist, um die Parameteridentifikation des wenigstens einen Motorparameters mit der wenigstens einen Emulationseinheit, also vorzugsweise kooperativ mit der wenigstens einen Emulationseinheit, durchzuführen. In anderen Worten können die wenigstens eine Emulationseinheit sowie die Identifikationseinheit funktional miteinander gekoppelt sein, und damit notwendigerweise nur gemeinsam die Parameteridentifikation durchführen. Entsprechend hat in diesem Fall die wenigstens eine Emulationseinheit eine Mehrfachfunktionalität, nämlich zum einen die Emulationsfunktion und zum anderen die Identifikationsfunktion. Die elektronische Verbindung hat daher den Vorteil, dass Komponenten der Emulationsvorrichtung wie z.B. Bauteile oder Baugruppen mehrfach verwendet werden können. Ebenso können bei einer softwaretechnischen Verbindung Softwaremodule mehrfach verwendet werden. Somit können gegenüber einer Lösung mit einer separaten Identifikationsvorrichtung Komponenten eingespart werden.

Es kann bei Ausführungsformen der erfindungsgemäßen Emulationsvorrichtung vorgesehen sein, dass eine Kontrolleinheit der Emulationsvorrichtung dazu ausgeführt ist, die Parameteridentifikation durch einen koordinierten Betrieb der wenigstens einen Emulationseinheit und der Identifikationseinheit durchzuführen. Hierzu kann die Kontrolleinheit einen Steuerungs- und Rechenbaustein wie bspw. wenigstens einen Mikrocontroller, DSP, FPGA oder dergleichen aufweisen, welcher elektrisch mit der Emulationseinheit und/oder der Identifikationseinheit verbunden ist. Damit wird eine kombinierte Verwendung der Identifikationseinheit mit der Emulationseinheit besonders einfach ermöglicht.

Ferner ist es optional vorgesehen, dass eine interne Schnittstelle der Emulationsvorrichtung eine Dateneinheit mit der Identifikationseinheit verbindet, um eine Parametrierung der wenigstens einen Emulationseinheit anhand des wenigstens einen (identifizierten) Motorparameters durchzuführen. Dies ermöglicht es, dass direkt nach der Parameteridentifikation die ermittelten Motorparameter an die Dateneinheit übertragen werden können und dort nicht flüchtig bereitgestellt werden können. Auf diese Weise kann eine Parametrierung der Emulationseinheit zum Beispiel dadurch erfolgen, dass die Emulationseinheit die bereitgestellten Motorparameter vor und/oder während der Emulation abruft.

Gemäß einer vorteilhaften Weiterbildung der Erfindung kann vorgesehen sein, dass die wenigstens eine Emulationseinheit jeweils die Emulationsfunktion und die oder eine weitere Identifikationsfunktion aufweist, also vorzugsweise eine Mehrfachfunktionalität aufweist. Dabei kann eine Umschaltvorrichtung, die insbesondere in die Kontrolleinheit integriert ist, zur Initiierung eines Wechsels zwischen diesen Funktionen, also der Emulations- und der Identifikationsfunktion, vorgesehen sein, um die wenigstens eine Emulationseinheit gemäß der Identifikationsfunktion zur Parameteridentifikation beim Elektromotor und gemäß der Emulationsfunktion zur anschließenden Prüfung des elektrischen Geräts und/oder Emulation des Elektromotors anhand der Parameteridentifikation, also insbesondere der identifizierten Motorparameter, zu betreiben.

Die Umschaltvorrichtung ist beispielsweise als elektrische Komponente oder Softwarekomponente in der Emulationsvorrichtung integriert, und kann zum Beispiel durch eine Eingabe eines Benutzers angesteuert werden. Dies hat den Vorteil, dass sehr einfach und komfortabel zwischen einer Parameteridentifikation und einer Emulation umgeschaltet werden kann.

Vorteilhaft ist es darüber hinaus, wenn bei einer Ausführungsvariante der erfindungsgemäßen Emulationsvorrichtung die wenigstens eine Emulationseinheit wenigstens eine der nachfolgenden Einheiten aufweist, welche entsprechend jeweils als eine der wenigstens einen Emulationseinheit ausgebildet sein können:
- eine Messwerterfassungseinheit, vorzugsweise mit einer Emulationsfunktion zur Erfassung von Messwerten, insbesondere betriebsrelevanter Größen beim elektrischen Gerät, bevorzugt zeitlich während der Prüfung des elektrischen Geräts, und besonders bevorzugt mit einer Identifikationsfunktion zur Erfassung physikalischer Größen bei dem Elektromotor, bspw. während der Durchführung der Parameteridentifikation,
- eine Modelleinheit mit einer Emulationsfunktion zur Berechnung der Aussteuergrade der Leistungseinheit bevorzugt basierend auf mathematischen Modellen des Elektromotors,
- eine Dateneinheit, vorzugsweise mit einer Emulationsfunktion zur Bereitstellung der Motorparameter, bspw. in der Form von Parametern für ein Modell der Emulation des Elektromotors, und bevorzugt mit einer Identifikationsfunktion zum Speichern der Messwerte der Messwerterfassungseinheit und/oder des wenigstens einen identifizierten Motorparameters,
- eine Leistungseinheit, vorzugsweise mit einer Emulationsfunktion zur Leistungsversorgung für die Emulation des Elektromotors und bevorzugt mir einer Identifikationsfunktion zur Leistungsversorgung des Elektromotors bei der Parameteridentifikation.

Jeder dieser Einheiten kann also eine Mehrfachfunktionalität aufweisen, um sowohl für die Emulation als auch für die Parameteridentifikation eingesetzt zu werden. Damit ist eine deutliche Vereinfachung und Kostenersparnis möglich.

Es kann im Rahmen der Erfindung vorgesehen sein, dass die Identifikationseinheit als eine kombinierte Modell- und Identifikationseinheit ausgebildet ist, und vorzugsweise mit einer Emulationsfunktion zur Modellierung des Elektromotors anhand des wenigstens einen identifizierten Motorparameters, bevorzugt zur Berechnung von Aussteuergraden einer Leistungseinheit, und besonders bevorzugt einer Identifikationsfunktion zur modellbasierten Parameteridentifikation ausgeführt ist. In anderen Worten kann eine kombinierte Modell- und Identifikationseinheit als eine einzige Einheit, vorzugsweise als eine elektronische Schaltung, vorgesehen sein, um sowohl die Modellierung des Elektromotors bei der Emulation als auch die Identifizierung der Motorparameter (als Modellparameter für die Modellierung) bei der Parameteridentifikation durchzuführen. Hierbei wird in vorteilhafter Weise die kombinierte Modell- und Identifikationseinheit durch eine Software gesteuert. Die Modell- und Identifikationseinheit weist dabei beispielsweise einen Prozessor, beispielsweise einen Mikrocontroller, einen DSP oder einen FPGA, auf.

Außerdem ist es von Vorteil, wenn die Identifikationseinheit und eine (insbesondere davon separate) Modelleinheit, letztere mit einer Emulationsfunktion zur Modellierung des Elektromotors, zum gemeinsamen Datenzugriff mit einer gemeinsamen Dateneinheit verbunden sind. Hierzu kann die Identifikationseinheit und die Modelleinheit jeweils über wenigstens eine elektrische Leitung mit der Dateneinheit verbunden sein, um Daten abzurufen, welche in der Dateneinheit nicht-flüchtig gespeichert sein können. Auf diese Weise können Ressourcen der Emulationsvorrichtung gemeinsam für die Emulation und die Parameteridentifikation genutzt werden.

Von weiterem Vorteil kann vorgesehen sein, dass die Emulationsvorrichtung als eine (insbesondere einzige) bauliche Einheit ausgebildet ist, sodass vorzugsweise die Identifikationseinheit und die wenigstens eine Emulationseinheit kombiniert als ein Prüfgerät für das elektrische Gerät ausgebildet sind. Beispielsweise können die Identifikationseinheit und die Emulationseinheit auch in einem gemeinsamen Gehäuse angeordnet sein. Eine solche Ausbildung erleichtert die Nutzung für die Emulation und die Parameteridentifikation. Dabei kann die bauliche Einheit bzw. das Prüfgerät auch mobil ausgeführt sein, so dass die Emulationsvorrichtung flexibel angeordnet und genutzt werden kann.

Ebenfalls Gegenstand der Erfindung ist ein Verfahren zur Bereitstellung einer Emulation eines Elektromotors bei einer Prüfung (Testen) eines elektrischen Geräts. Hierbei ist vorgesehen, dass die nachfolgenden Schritte durchgeführt werden, wobei die Schritte zeitlich nacheinander, insbesondere in der angegebenen Reihenfolge, oder in beliebiger Reihenfolge oder auch zumindest teilweise zeitlich überlappend durchgeführt werden können:
- Durchführen einer Parameteridentifikation bei dem Elektromotor, wobei die Parameteridentifikation und/oder eine Erfassung von Messwerten am Elektromotor durch eine, insbesondere erfindungsgemäße, Emulationsvorrichtung erfolgt,
- Auswerten der erfassten Messwerte, um ein Auswertungsergebnis zu bestimmen, vorzugsweise um wenigstens einen für die Emulation relevanten Motorparameter zu identifizieren,
- Parametrieren der Emulationsvorrichtung für die Emulation des Elektromotors anhand des Auswertungsergebnisses, vorzugsweise anhand der identifizierten Motorparameter.

Damit bringt das erfindungsgemäße Verfahren die gleichen Vorteile mit sich, wie sie ausführlich mit Bezug auf eine erfindungsgemäße Emulationsvorrichtung beschrieben worden sind. Zudem kann eine erfindungsgemäße Emulationsvorrichtung bei dem erfindungsgemäßen Verfahren vorgesehen sein. Ferner kann der Vorteil durch das erfindungsgemäße Verfahren erzielt werden, dass der Aufwand zur Parameteridentifikation des physikalisch vorliegenden Elektromotors und der Emulation desselben deutlich reduziert wird, da die beiden wesentlichen Funktion in einem Gerät, nämlich der Emulationsvorrichtung, vereint werden. Dadurch können sich auch infrastrukturelle Vorteile ergeben.

In einer weiteren Möglichkeit kann vorgesehen sein, dass zur Durchführung der Parameteridentifikation der (physikalisch vorliegende) Elektromotor mit der Emulationsvorrichtung, insbesondere einer Identifikationseinheit der Emulationsvorrichtung, elektrisch verbunden wird, und vorzugsweise sodann während eines Betriebs des Elektromotors die Messwerte erfasst werden. Die Messwerte können z. B. in einer oder mehreren Messreihen erfasst werden. Im Anschluss daran kann der Elektromotor wieder von der Emulationsvorrichtung getrennt werden und insbesondere zur Prüfung vollständig entfernt werden, um unabhängig vom Elektromotor an verschiedenen elektrischen Geräten flexibel die Prüfung durchführen zu können.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines Elektromotor-Emulators sowie einer Motorparameter-Identifikationseinheit,
- Figur 2: eine schematische Darstellung einer erfindungsgemäßen Emulationsvorrichtung,
- Figur 3: eine weitere schematische Darstellung einer erfindungsgemäßen Emulationsvorrichtung,
- Figur 4: eine weitere schematische Darstellung einer erfindungsgemäßen Emulationsvorrichtung,
- Figur 5: eine weitere schematische Darstellung einer erfindungsgemäßen Emulationsvorrichtung,
- Figur 6: eine weitere schematische Darstellung einer erfindungsgemäßen Emulationsvorrichtung,
- Figur 7: eine weitere schematische Darstellung einer erfindungsgemäßen Emulationsvorrichtung,
- Figur 8: eine schematische Darstellung einer Anordnung zur Emulation und/oder Parameteridentifikation,
- Figur 9: eine weitere schematische Darstellung einer Anordnung zur Emulation und/oder Parameteridentifikation,
- Figur 10: eine weitere schematische Darstellung einer Anordnung zur Emulation und/oder Parameteridentifikation.

In den nachfolgenden Figuren werden für die gleichen technischen Merkmale auch von unterschiedlichen Ausführungsbeispielen die identischen Bezugszeichen verwendet.

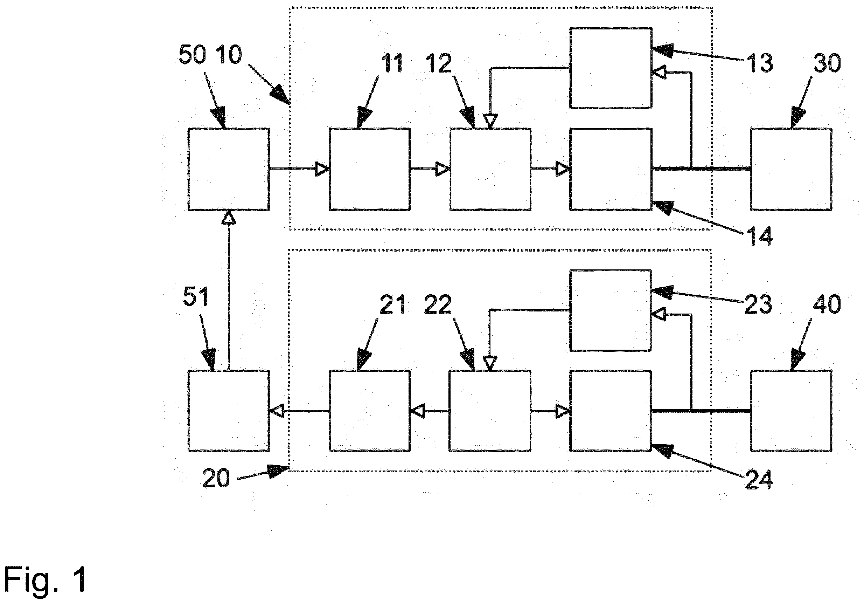

In Figur 1 sind schematisch funktionale Bestandteile eines Elektromotor-Emulators 10 sowie einer Motorparameter-Identifikationseinheit 20 veranschaulicht. Die darin gezeigten technischen Merkmale können (ggf. in kombinierter Weise) bei einer erfindungsgemäßen Emulationsvorrichtung 60 vorgesehen sein. Es handelt sich somit bei der erfindungsgemäßen Emulationsvorrichtung 60 um ein kombiniertes Prüfgerät, umfassend den Elektromotor-Emulator 10 sowie die Motorparameter-Identifikationseinheit 20. Die hat aufgrund der Kombination der Motorparameter-Identifikationseinheit 20 mit dem Elektromotor-Emulator 10 deutliche Vorteile gegenüber einem herkömmlichen Emulator, bei welchem die gezeigten technischen Merkmale separat vorgesehen sind. Somit sind dann der Elektromotor-Emulator 10 und die Motorparameter-Identifikationseinheit 20 zwei getrennte und autarke Einheiten.

Beispielsweise werden die von der Motorparameter-Identifikationseinheit 20 gemessenen Daten oder identifizierten (Motor-) Parameter des Elektromotors 40 durch eine Benutzerschnittstelle 51 ausgegeben, so dass es einem Benutzer obliegt, diese Daten gegebenenfalls aufzubereiten und über die Benutzerschnittstelle 50 des Elektromotor-Emulators 10 einzugeben. Dabei kann bei einer erfindungsgemäßen Emulationsvorrichtung 60 gegebenenfalls auf die Benutzerschnittstellen 50, 51 verzichtet werden, oder es können die Benutzerschnittstellen 50, 51 in gegebenenfalls veränderter Form (zum Beispiel als kombinierte Schnittstelle) vorgesehen sein.

Ferner ist in Figur 1 gezeigt, dass ein Elektromotor-Emulator 10, bzw. die funktionell dem Elektromotor-Emulator 10 zugeordneten Komponenten der erfindungsgemäßen Emulationsvorrichtung 60, eine Dateneinheit 11, eine Modelleinheit 12, eine Messwerterfassungseinheit 13 und/oder eine Leistungseinheit 14 umfassen können. Ferner kann eine Motorparameter-Identifikationseinheit 20, bzw. die der Motorparameter-Identifikationseinheit 20 funktionell zugeordneten Komponenten einer erfindungsgemäßen Emulationsvorrichtung 60, ebenfalls eine Dateneinheit 21, eine Modelleinheit 22, eine Messwerterfassungseinheit 23 und/oder eine Leistungseinheit 24 umfassen. Durch die Kombination der Elektromotor-Emulator-Funktionalität sowie der Motorparameter-Identifikationseinheit-Funktionalität bei der Emulationsvorrichtung 60 kann vorteilhafterweise auf einige dieser (doppelt vorgesehenen) Einheiten verzichtet werden, um hierdurch den technischen Aufwand zu reduzieren.

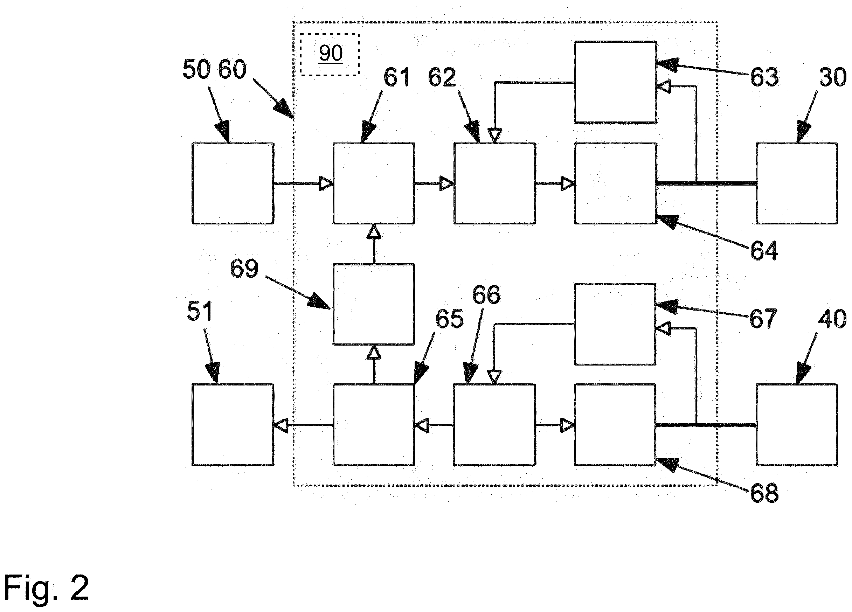

In Figur 2 ist schematisch eine erfindungsgemäße Emulationsvorrichtung 60 gezeigt, bei welcher die Kombination der Funktionalität des Elektromotor-Emulators 10 und der Motorparameter-Identifikationseinheit 20 in einer Einheit 60 veranschaulicht wird. Um zwischen den Funktionalitäten umzuschalten, kann zudem eine Umschaltvorrichtung 90, die insbesondere in eine Kontrolleinheit integriert ist, vorgesehen sein. Für die Parameteridentifikation kann ein Elektromotor 40 als zu parametrierender Elektromotor 40 elektrisch mit der Emulationsvorrichtung 60 verbunden werden. Beispielsweise wird der Elektromotor 40 direkt mit einer Leistungseinheit 68 verbunden und/oder über die Leistungseinheit 68 mit einer Identifikationseinheit 66 verbunden. Die Leistungseinheit 68 kann einen Betrieb des Elektromotors 40 für die Parameteridentifikation ermöglichen, bei welchem eine Messwerterfassung durch eine Messwerterfassungseinheit 67 erfolgt. Die Messwerte und/oder die identifizierten Parameter können sodann in einer Dateneinheit 65 abgespeichert werden, und zum Beispiel durch eine interne Schnittstelle 69 zur Parametrierung der Emulation genutzt werden. Alternativ oder zusätzlich können die Messwerte und/oder die identifizierten Parameter über eine Benutzerschnittstelle 51 ausgegeben werden und über eine Benutzerschnittstelle 50 zur Parametrierung eingegeben werden. Des Weiteren ist es denkbar, dass zur Parametrierung die Daten der Dateneinheit 65 über die interne Schnittstelle 69 und/oder über die Benutzerschnittstelle 50 in einer weiteren Dateneinheit 61 abgelegt werden. Auf diese kann eine Modelleinheit 62 zugreifen, um über eine Leistungseinheit 64 und/oder eine Messwerterfassungseinheit 63 eine Emulation des Elektromotors 40 durchzuführen. Dies wird zum Beispiel dazu genutzt, ein elektrisches Gerät 30 wie einen Antriebsumrichter 30 zu prüfen. Bei dieser Prüfung kann der Elektromotor 40 entfernt sein.

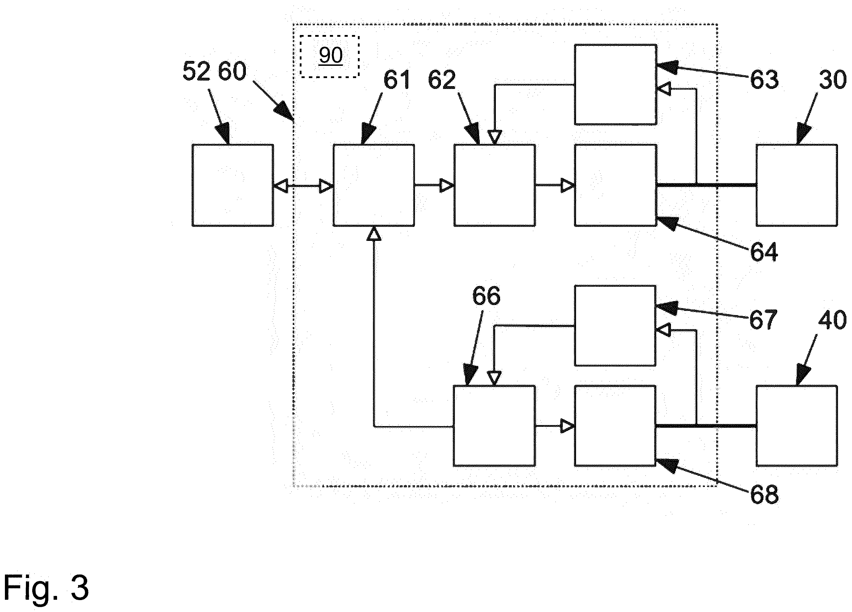

In Figur 3 ist schematisch gezeigt, dass die Modelleinheit 62 und die Identifikationseinheit 66 auch auf eine gemeinsame Dateneinheit 61 zugreifen können, so dass auf eine zusätzliche Dateneinheit 65 verzichtet werden kann. Darüber hinaus kann auch eine kombinierte Benutzerschnittstelle 52 die Funktionalität der beiden Benutzerschnittstellen 50, 51 aufweisen. Dies ermöglicht eine weitere Kostenersparnis.

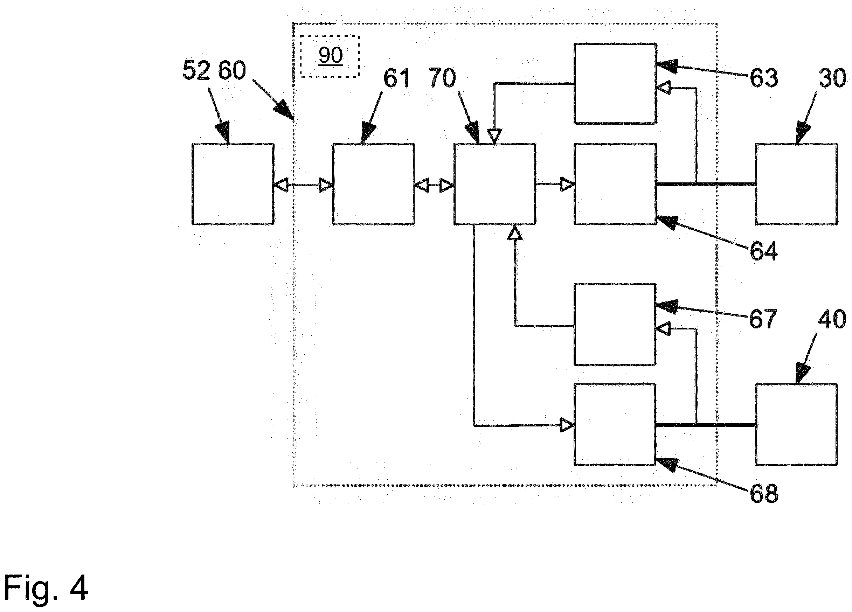

Figur 4 zeigt eine vorteilhafte Weiterbildung, bei welcher die Funktionalitäten der Modelleinheit 62 sowie der Identifikationseinheit 66 in einer gemeinsamen kombinierten Modell- und Identifikationseinheit 70 zusammengefasst sind. Auf diese Weise kann eine der Einheiten 62, 66 entfallen.

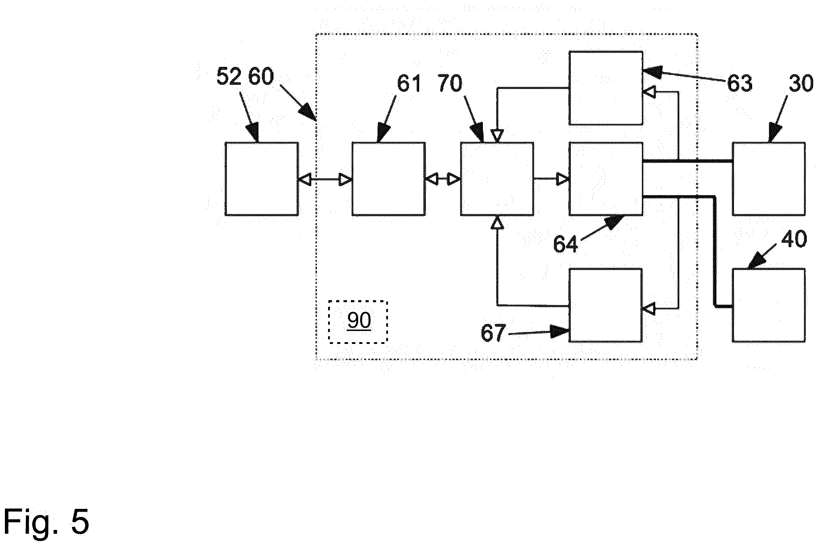

In Figur 5 ist schematisch zu sehen, dass auch eine der Leistungseinheiten 64, 68 entfallen kann, und stattdessen nur eine der Leistungseinheiten 64 genutzt wird. Diese kann entsprechend sowohl zur Emulation als auch zur Parameteridentifikation genutzt werden, wobei zwischen diesen Funktionalitäten insbesondere durch eine Umschaltvorrichtung 90 gewechselt werden kann.

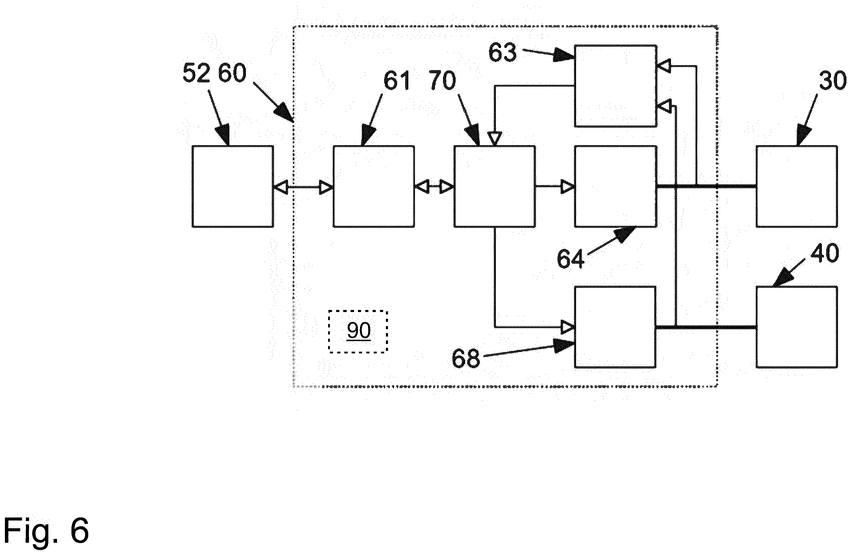

Figur 6 zeigt schematisch, dass anstatt zweier Messwerterfassungseinheiten 63, 67 nur eine Messwerterfassungseinheit 63 sowohl für die Emulation als auch für die Parameteridentifikation eingesetzt werden kann. Hierdurch können der Kostenaufwand sowie der Platzbedarf weiter reduziert werden.

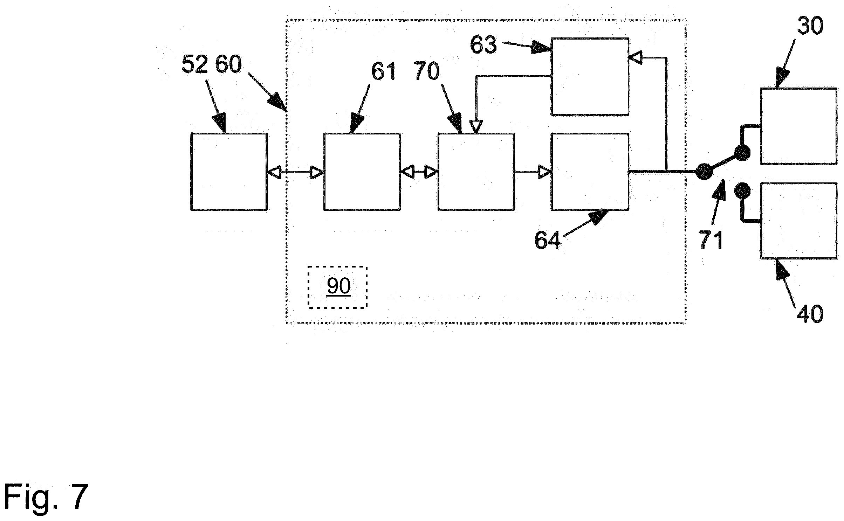

Figur 7 zeigt eine vorteilhafte Weiterbildung, bei welcher sowohl für die Emulation als auch für die Parameteridentifikation nur eine einzige Leistungseinheit 64 und nur eine einzige Messwerterfassungseinheit 63 genutzt werden kann. Dabei kann ein Wechsel zwischen dem zu prüfenden elektrischen Gerät 30, insbesondere Inverter 30, und dem zu parametrierenden Elektromotor 40 zum Beispiel über eine Umschalteinheit 71 erfolgen. Hierzu kann die Umschalteinheit 71 zum Beispiel mit der Umschaltvorrichtung 90 zur Ansteuerung elektrisch verbunden sein. Alternativ oder zusätzlich kann auch ein manueller Wechsel vorgesehen sein.

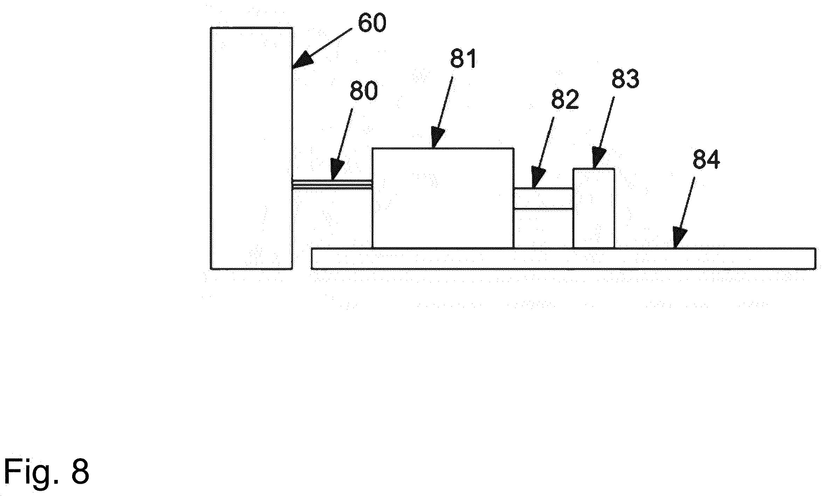

In Figur 8 ist schematisch gezeigt, dass bei einer Parameteridentifikation die erfindungsgemäße Emulationsvorrichtung 60 über eine elektrische Verbindung 80 mit einem feststehenden Teil 81 eines Elektromotors 40 verbunden sein kann. Ferner kann der bewegliche Teil 82 des Elektromotors 40 durch eine Mechanik 83, insbesondere eine blockierende Mechanik 83, an einer Bewegung gehindert werden. Der Kraftfluss zwischen dem beweglichen und unbeweglichen Teil des Elektromotors 40 kann ferner durch die Mechanik 83 und/oder eine gemeinsame Haltevorrichtung 84 ermöglicht werden. Bei der Haltevorrichtung 84 handelt es sich zum Beispiel um ein Prüfbrett oder um einen Flansch oder dgl. Hierbei ist der Vorteil, dass durch die definierte Position des beweglichen Teils 82 die Auswertung der Messwerte zum Zwecke der Parameteridentifikation des Elektromotors 40 einfacher möglich ist. Weiterhin kann sich durch das Fehlen der beweglichen Teile die Betriebssicherheit erhöhen.

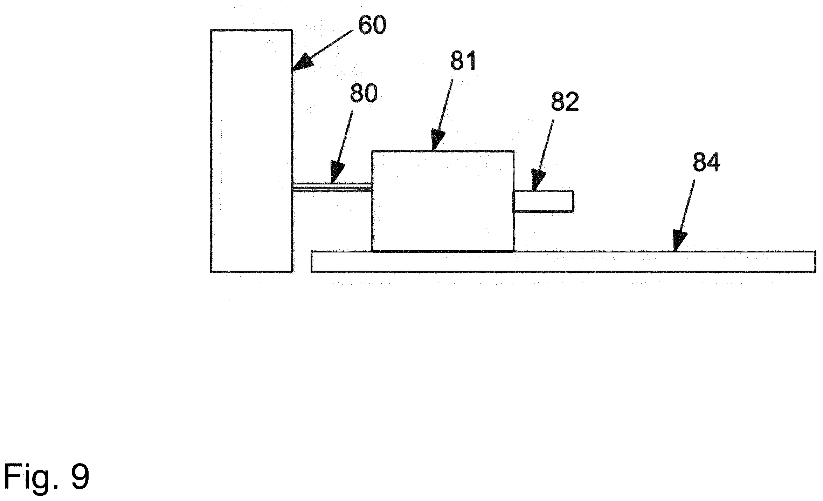

In Figur 9 ist eine zur Figur 8 ähnliche Anordnung gezeigt, wobei bei diesem Ausführungsbeispiel auf eine blockierende Mechanik 83 verzichtet wird. Entsprechend kann der bewegliche Teil 82 des Elektromotors 40 nicht an der Bewegung gehindert werden. Hierbei kann ein Vorteil sein, dass auf eine Mechanik zur Fixierung des beweglichen Teils 82 verzichtet werden kann.

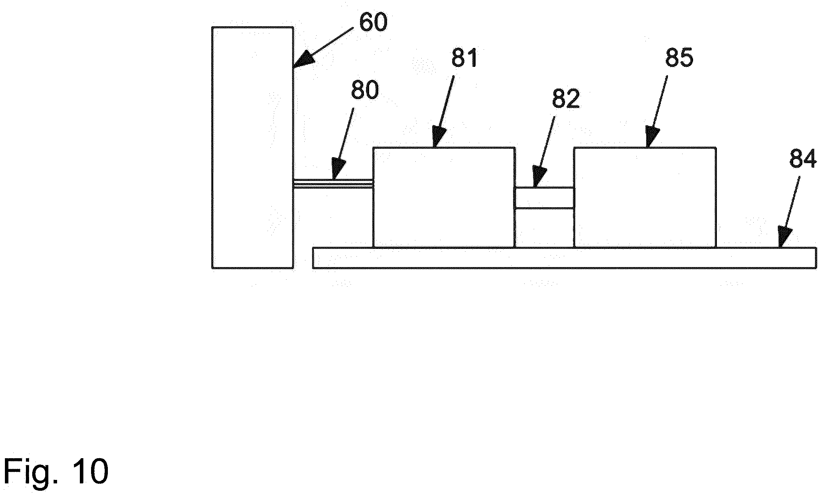

Figur 10 zeigt schematisch, dass die blockierende Mechanik 83 auch durch eine Bewegungsquelle 85 ersetzt werden kann. Durch die Bewegungsquelle 85 kann eine definierte oder undefinierte Bewegung in den beweglichen Teil 82 des Elektromotors 40 eingeprägt werden. Hierbei kann ein Vorteil sein, dass eine definierte Bewegung bzw. mechanische Belastung eingestellt werden kann, wodurch die Genauigkeit der Parameteridentifikation erhöht werden kann. Ferner ist es gegebenenfalls möglich, dass es sich bei der Bewegungsquelle 85 um einen weiteren gesteuerten oder geregelten Motor jeglicher Technologie oder einen manuellen Eingriff beispielsweise durch ein Handrad oder eine Kurbel oder dgl. handelt. Darüber hinaus kann die Bewegungsquelle 85 auch als eine Positioniereinrichtung ausgeführt sein, die eine bestimmte Position einstellt und anschließend eine Blockade des beweglichen Teils 82 einstellt.

Ferner ist gemäß den Figuren 1 bis 10 auch ein erfindungsgemäßes Verfahren visualisiert, bei welchem bspw. in einem ersten Schritt bei einer Parameteridentifikation Messwerte bei einem Elektromotor 40 erfasst werden können. Anschließend können die erfassten Messwerte ausgewertet werden, wobei die Auswertung gegebenenfalls auch gleichzeitig mit der Erfassung stattfinden kann. Dabei ist es auch denkbar, dass die Messwerte (zum Beispiel während der Messung) in der Identifikationseinheit 66 und/oder in der Modelleinheit 62 und/oder (gemäß Figur 4 bis 7) in der kombinierten Modell- und Identifikationseinheit 70 ausgewertet werden können. Auch ist es denkbar, dass die erfassten Messwerte zunächst auf einem nicht näher dargestellten externen Rechengerät (zum Beispiel einem Computer) gespeichert und dort ausgewertet werden können, und anschließend zur erfindungsgemäßen Emulationsvorrichtung über ein Netzwerk übertragen werden. Das Netzwerk kann dabei beispielsweise eine Ethernet-Technologie umfassen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Elektromotor-Emulator
- 11: Emulator-Dateneinheit
- 12: Emulator-Modelleinheit
- 13: Emulator-Messwerterfassungseinheit
- 14: Emulator-Leistungseinheit

- 20: Motorparameter-Identifikationseinheit
- 21: Identifikations-Dateneinheit
- 22: Identifikations-Modelleinheit
- 23: Identifikations-Messwerterfassungseinheit
- 24: Identifikations-Leistungseinheit

- 30: elektrisches Gerät, Inverter, Antriebsumrichter, zu prüfender Inverter

- 40: Elektromotor, zu parametrierender Elektromotor

- 50: Benutzerschnittstelle für Elektromotor-Emulator
- 51: Benutzerschnittstelle für Motorparameter-Identifikationseinheit
- 52: kombinierte Benutzerschnittstelle für Elektromotor-Emulator und Motorparameter-Identifikationseinheit

- 60: Emulationsvorrichtung
- 61: Dateneinheit
- 62: Modelleinheit
- 63: Messwerterfassungseinheit
- 64: Leistungseinheit
- 65: Dateneinheit
- 66: Identifikationseinheit
- 67: Messwerterfassungseinheit
- 68: Leistungseinheit
- 69: interne Schnittstelle
- 70: kombinierte Modell- und Identifikationseinheit
- 71: Umschalteinheit

- 80: elektrische Verbindung
- 81: Elektromotor (feststehender Teil)
- 82: Elektromotor (beweglicher Teil)
- 83: blockierende Mechanik
- 84: Haltevorrichtung
- 85: Bewegungsquelle
- 90: Umschaltvorrichtung

## Patentansprüche

1. Emulationsvorrichtung (60) zur Emulation eines Elektromotors (40), um wenigstens eine Eigenschaft des Elektromotors (40) bei einer Prüfung eines elektrischen Geräts (30), insbesondere eines Antriebsumrichters (30), nachzubilden, mit wenigstens einer Emulationseinheit (61, 62, 63, 64) zur Bereitstellung einer Emulationsfunktion, um die Emulation anhand wenigstens eines Motorparameters des Elektromotors (40) durchzuführen,
wobei eine Identifikationseinheit (66) zur Bereitstellung einer Identifikationsfunktion in die Emulationsvorrichtung (60) integriert ist, um eine Parameteridentifikation des wenigstens einen Motorparameters beim Elektromotor (40) durchzuführen.

2. Emulationsvorrichtung (60) nach Anspruch 1,
**dadurch gekennzeichnet,**
**dass** die Identifikationseinheit (66) elektronisch oder softwaretechnisch mit der wenigstens einen Emulationseinheit (61, 62, 63, 64) verbunden ist, um die Parameteridentifikation des wenigstens einen Motorparameters mit der wenigstens einen Emulationseinheit (61, 62, 63, 64) durchzuführen.

3. Emulationsvorrichtung (60) nach Anspruch 1 oder 2,
**dadurch gekennzeichnet,**
**dass** eine interne Schnittstelle (69) der Emulationsvorrichtung (60) eine Dateneinheit (61) mit der Identifikationseinheit (66) verbindet, um eine Parametrierung der wenigstens einen Emulationseinheit (61, 62, 63, 64) anhand des wenigstens einen Motorparameters durchzuführen.

4. Emulationsvorrichtung (60) nach einem der vorhergehenden Ansprüche,
**dadurch gekennzeichnet,**
**dass** die wenigstens eine Emulationseinheit (61, 62, 63, 64) jeweils die Emulationsfunktion und die Identifikationsfunktion aufweist, wobei eine Umschaltvorrichtung (90) zur Initiierung eines Wechsels zwischen diesen Funktionen vorgesehen ist, um die wenigstens eine Emulationseinheit (61, 62, 63, 64) gemäß der Identifikationsfunktion zur Parameteridentifikation beim Elektromotor (40) und gemäß der Emulationsfunktion zur anschließenden Prüfung des elektrischen Geräts (30) und/oder Emulation des Elektromotors (40) anhand der Parameteridentifikation zu betreiben.

5. Emulationsvorrichtung (60) nach einem der vorhergehenden Ansprüche,
**dadurch gekennzeichnet,**
**dass** die wenigstens eine Emulationseinheit (61, 62, 63, 64) wenigstens eine der nachfolgenden Einheiten aufweist:
- eine Messwerterfassungseinheit (63) mit einer Emulationsfunktion zur Erfassung von Messwerten, vorzugsweise während der Prüfung des elektrischen Geräts (30), und mit einer Identifikationsfunktion zur Erfassung physikalischer Größen bei dem Elektromotor (40),
- eine Modelleinheit (62) mit einer Emulationsfunktion zur Berechnung der Aussteuergrade der Leistungseinheit bevorzugt basierend auf mathematischen Modellen des Elektromotors (40),
- eine Dateneinheit (61) mit einer Emulationsfunktion zur Bereitstellung von Parametern für ein Modell der Emulation des Elektromotors (40) und mit einer Identifikationsfunktion zum Speichern der Messwerte der Messwerterfassungseinheit (63) und/oder des wenigstens einen identifizierten Motorparameters,
- eine Leistungseinheit (64) mit einer Emulationsfunktion zur Leistungsversorgung für die Emulation des Elektromotors (40) und einer Identifikationsfunktion zur Leistungsversorgung des Elektromotors (40) bei der Parameteridentifikation.

6. Emulationsvorrichtung (60) nach einem der vorhergehenden Ansprüche,
**dadurch gekennzeichnet,**
**dass** die Identifikationseinheit (66) als eine kombinierte Modell- und Identifikationseinheit (70) ausgebildet ist, und mit einer Emulationsfunktion zur Modellierung des Elektromotors (40) anhand des wenigstens einen identifizierten Motorparameters, vorzugsweise zur Berechnung von Aussteuergraden einer Leistungseinheit (64), und mit einer Identifikationsfunktion zur modellbasierten Parameteridentifikation ausgeführt ist.

7. Emulationsvorrichtung (60) nach einem der vorhergehenden Ansprüche,
**dadurch gekennzeichnet,**
**dass** die Identifikationseinheit (66) und eine davon separate Modelleinheit (62) mit einer Emulationsfunktion zur Modellierung des Elektromotors (40) zum gemeinsamen Datenzugriff mit einer gemeinsamen Dateneinheit (61) verbunden sind.

8. Emulationsvorrichtung (60) nach einem der vorhergehenden Ansprüche,
**dadurch gekennzeichnet,**
**dass** die Emulationsvorrichtung (60) als eine bauliche Einheit ausgebildet ist, sodass die Identifikationseinheit (66) und die wenigstens eine Emulationseinheit (61, 62, 63, 64) kombiniert als ein Prüfgerät für das elektrische Gerät (30) ausgebildet sind.

9. Verfahren zur Bereitstellung einer Emulation eines Elektromotors (40) bei einer Prüfung eines elektrischen Geräts (30),
wobei die nachfolgenden Schritte durchgeführt werden:
- Durchführen einer Parameteridentifikation bei dem Elektromotor (40), wobei eine Erfassung von Messwerten am Elektromotor (40) durch eine Emulationsvorrichtung (60) erfolgt,
- Auswerten der erfassten Messwerte, um ein Auswertungsergebnis zu bestimmen,
- Parametrieren der Emulationsvorrichtung (60) für die Emulation des Elektromotors (40) anhand des Auswertungsergebnisses.

10. Verfahren nach Anspruch 9,
**dadurch gekennzeichnet,**
**dass** zur Durchführung der Parameteridentifikation der Elektromotor (40) mit einer Identifikationseinheit (66) elektrisch verbunden wird, und dann während eines Betriebs des Elektromotors (40) die Messwerte erfasst werden.

11. Verfahren nach Anspruch 9 oder 10,
**dadurch gekennzeichnet,**
**dass** die Emulationsvorrichtung (60) nach einem der Ansprüche 1 bis 8 ausgebildet ist.

## Claims

1. Emulation device (60) for emulating an electric motor (40) in order to mimic at least one property of the electric motor (40) during a test of an electrical device (30), in particular a drive inverter (30), said emulation device comprising at least one emulation unit (61, 62, 63, 64) for providing an emulation function in order to carry out the emulation based on at least one motor parameter of the electric motor (40),
wherein an identification unit (66) for providing an identification function is integrated in the emulation device (60) in order to carry out parameter identification of the at least one motor parameter at the electric motor (40) .

2. Emulation device (60) according to claim 1,
**characterised in that**
the identification unit (66) is connected to the at least one emulation unit (61, 62, 63, 64) electronically or by software in order to carry out the parameter identification of the at least one motor parameter by means of the at least one emulation unit (61, 62, 63, 64).

3. Emulation device (60) according to claim 1 or 2,
**characterised in that**
an internal interface (69) of the emulation device (60) connects a data unit (61) to the identification unit (66) in order to carry out parameterisation of the at least one emulation unit (61, 62, 63, 64) based on the at least one motor parameter.

4. Emulation device (60) according to any of the preceding claims,
**characterised in that**
the at least one emulation unit (61, 62, 63, 64) in each case comprises the emulation function and the identification function, wherein a switching device (90) is provided for initiating a change between said functions in order to operate the at least one emulation unit (61, 62, 63, 64) according to the identification function for parameter identification at the electric motor (40) and according to the emulation function for subsequent testing of the electrical device (30) and/or emulation of the electric motor (40) based on the parameter identification.

5. Emulation device (60) according to any of the preceding claims,
**characterised in that**
the at least one emulation unit (61, 62, 63, 64) comprises at least one of the following units:
- a measured-value recording unit (63) having an emulation function for recording measured values, preferably during the test of the electrical device (30), and having an identification function for recording physical variables at the electric motor (40),
- a modelling unit (62) having an emulation function for calculating the degrees of modulation of the power unit preferably based on mathematical models of the electric motor (40),
- a data unit (61) having an emulation function for providing parameters for a model of the emulation of the electric motor (40) and having an identification function for storing the measured values of the measured-value recording unit (63) and/or the at least one identified motor parameter,
- a power unit (64) having an emulation function for providing power for the emulation of the electric motor (40) and an identification function for providing power to the electric motor (40) during parameter identification.

6. Emulation device (60) according to any of the preceding claims,
**characterised in that**
the identification unit (66) is designed as a combined modelling and identification unit (70), and is designed having an emulation function for modelling the electric motor (40) based on the at least one identified motor parameter, preferably for calculating degrees of modulation of a power unit (64), and having an identification function for model-based parameter identification.

7. Emulation device (60) according to any of the preceding claims,
**characterised in that**
the identification unit (66) and a modelling unit (62) separate therefrom and having an emulation function for modelling the electric motor (40) are connected to a common data unit (61) for shared data access.

8. Emulation device (60) according to any of the preceding claims,
**characterised in that**
the emulation device (60) is designed as a structural unit such that the identification unit (66) and the at least one emulation unit (61, 62, 63, 64) are combined as a test device for the electrical device (30).

9. Method for providing emulation of an electric motor (40) during a test of an electrical device (30),
wherein the following steps are carried out:
- carrying out parameter identification at the electric motor (40), wherein measured values are recorded at the electric motor (40) by means of an emulation device (60),
- evaluating the recorded measured values in order to determine an evaluation result,
- parameterising the emulation device (60) for the emulation of the electric motor (40) based on the evaluation result.

10. Method according to claim 9,
**characterised in that**
the electric motor (40) is electrically connected to an identification unit (66) in order to carry out the parameter identification, and then the measured values are recorded during operation of the electric motor (40).

11. Method according to claim 9 or 10,
**characterised in that**
the emulation device (60) is designed according to any of claims 1 to 8.

## Revendications

1. Dispositif d'émulation (60) pour émuler un moteur électrique (40) afin d'imiter au moins une propriété du moteur électrique (40) lors d'un essai d'un dispositif électrique (30), en particulier un inverseur d'entraînement (30), ledit dispositif d'émulation comprenant au moins une unité d'émulation (61, 62, 63, 64) pour assurer une fonction d'émulation afin de réaliser l'émulation en fonction d'au moins un paramètre de moteur du moteur électrique (40),
dans lequel une unité d'identification (66) pour assurer une fonction d'identification est intégrée dans le dispositif d'émulation (60) afin de réaliser une identification de paramètres d'au moins un paramètre du moteur électrique (40).

2. Dispositif d'émulation (60) selon la revendication 1,
**caractérisé en ce que**
l'unité d'identification (66) est connectée à l'au moins une unité d'émulation (61, 62, 63, 64) électroniquement ou par logiciel afin de réaliser l'identification de paramètres d'au moins un paramètre de moteur au moyen de l'au moins une unité d'émulation (61, 62, 63, 64) .

3. Dispositif d'émulation (60) selon la revendication 1 ou 2,
**caractérisé en ce que**
une interface interne (69) du dispositif d'émulation (60) connecte une unité de données (61) à l'unité d'identification (66) afin de réaliser un paramétrage de l'au moins une unité d'émulation (61, 62, 63, 64) en fonction de l'au moins un paramètre de moteur.

4. Dispositif d'émulation (60) selon l'une quelconque des revendications précédentes,
**caractérisé en ce que**
l'au moins une unité d'émulation (61, 62, 63, 64) comprend dans chaque cas la fonction d'émulation et la fonction d'identification, un dispositif de commutation (90) étant fourni pour lancer un changement entre lesdites fonctions afin d'exploiter l'au moins une unité d'émulation (61, 62, 63, 64) selon la fonction d'identification pour l'identification de paramètres au niveau du moteur électrique (40) et selon la fonction d'émulation pour des essais ultérieurs du dispositif électrique (30) et/ou une émulation du moteur électrique (40) en fonction de l'identification de paramètres.

5. Dispositif d'émulation (60) selon l'un des revendications précédentes,
**caractérisé en ce que**
l'au moins une unité d'émulation (61, 62, 63, 64) comprend au moins une des unités suivantes :
- une unité d'enregistrement de valeurs mesurées (63) ayant une fonction d'émulation pour enregistrer des valeurs mesuréess, de préférence pendant l'essai du dispositif électrique (30), et ayant une fonction d'identification pour l'enregistrement de variables physiques au niveau du moteur électrique (40),
- une unité de modélisation (62) ayant une fonction d'émulation pour calculer les degrés de modulation de l'unité de puissance de préférence sur la base de modèles mathématiques du moteur électrique (40),
- une unité de données (61) ayant une fonction d'émulation pour fournir des paramètres pour un modèle d'émulation du moteur électrique (40) et ayant une fonction d'identification pour stocker les valeurs mesurées de l'unité d'enregistrement de valeurs de mesure (63) et/ou de l'au moins un paramètre de moteur identifié,
- une unité de puissance (64) ayant une fonction d'émulation pour fournir une puissance pour l'émulation du moteur électrique (40) et une fonction d'identification pour fournir une puissance au moteur électrique (40) lors de l'identification de paramètres.

6. Dispositif d'émulation (60) selon l'un des revendications précédentes,
**caractérisé en ce que**
l'unité d'identification (66) est conçue en tant qu'unité combinée de modélisation et d'identification (70) et est conçue pour avoir une fonction d'émulation pour la modélisation du moteur électrique (40) en fonction de l'au moins un paramètre de moteur identifié, de préférence pour calculer des degrés de modulation d'une unité de puissance (64), et ayant une fonction d'identification pour une identification de paramètres à base de modèles.

7. Dispositif d'émulation (60) selon l'un des revendications précédentes,
**caractérisé en ce que**
l'unité d'identification (66) et une unité de modélisation (62) séparée de celle-ci et ayant une fonction d'émulation pour modéliser le moteur électrique (40) sont connectées à une unité de données commune (61) pour un accès partagé aux données.

8. Dispositif d'émulation (60) selon l'une quelconque des revendications précédentes,
**caractérisé en ce que**
le dispositif d'émulation (60) est conçu en tant qu'unité structurelle de telle sorte que l'unité d'identification (66) et l'au moins une unité d'émulation (61, 62, 63, 64) soient combinées en tant que dispositif d'essai pour le dispositif électrique (30).

9. Procédé d'émulation d'un moteur électrique (40) lors d'un essai d'un dispositif électrique (30),
dans lequel les étapes suivantes sont réalisées :
- la réalisation d'une identification de paramètres au niveau du moteur électrique (40), dans lequel des valeurs mesurées sont enregistrées au niveau du moteur électrique (40) au moyen d'un dispositif d'émulation (60),
- l'évaluation des valeurs mesurées enregistrées afin de déterminer un résultat d'évaluation,
- le paramétrage du dispositif d'émulation (60) pour l'émulation du moteur électrique (40) en fonction du résultat de l'évaluation.

10. Procédé selon la revendication 9,
**caractérisé en ce que**
le moteur électrique (40) est connecté électriquement à une unité d'identification (66) afin de réaliser une identification de paramètres, puis les valeurs mesurées sont enregistrées pendant le fonctionnement du moteur électrique (40).

11. Procédé selon la revendication 9 ou 10,
**caractérisé en ce que**
le dispositif d'émulation (60) est conçu selon l'une quelconque des revendications 1 à 8.
